# EUROPEAN PATENT APPLICATION

(11) **EP 3 903 981 A1**
(43) Date of publication of application: **03.11.2021**
(21) Application number: 21161732.9
(22) Date of filing: 10.03.2021
(51) Int. Cl.: B23K 1/20, B23K 9/235, B23K 11/34, B23K 15/00, B23K 20/24, B23K 26/60

(54) **JOINING COMPONENT BODIES**

(30) Priority: 03.04.2020 GB 202004947
(71) Applicant: Rolls-Royce plc, London N1 9FX (GB)
(72) Inventor: Marinescu, Iulian, Derby, Derbyshire DE24 8BJ (GB); Tan, Adrian, Derby, Derbyshire DE24 8BJ (GB); Liu, Erjia, Derby, Derbyshire DE24 8BJ (GB); Li, Feng, Derby, Derbyshire DE24 8BJ (GB); Sun, Wen, Derby, Derbyshire DE24 8BJ (GB)
(74) Representative: Rolls-Royce plc

(57) **Abstract**

A method of joining first and second component bodies comprises: cold-spraying a first joining surface of the first component body with a bond material which is harder than the first joining surface; cold-spraying a second joining surface of the second component body with the bond material; and joining the first and second component bodies by way of the first joining surface.

## Description

### Field of the disclosure

The present disclosure concerns methods relating to joining first and second component bodies and components manufactured using such methods.

### Background

Structural component manufacturing methods may include steps of joining component bodies to one another. Many methods for joining component bodies are known. For example, metal component bodies may be joined by welding, soldering or brazing, or through the use of adhesives.

However, there are problems associated with known joining processes. For example, many materials, including many metals, are not suitable for joining by welding due to the high temperatures required. The strength of joints achieved using adhesives may be inadequate for many applications, depending on the component body materials to be joined. It can also be particularly difficult to join component bodies made of dissimilar materials. Improved joining methods would therefore be of benefit.

### Summary

The present disclosure provides a method of joining first and second component bodies, and a component, as set out in the appended claims.

According to a first aspect, there is provided a method of joining first and second component bodies (i.e. to one another), the method comprising: cold-spraying a first joining surface of the first component body with a bond material which is harder than the first joining surface (i.e. when measured under the same conditions); cold-spraying a second joining surface of the second component body with the bond material; and joining the first and second component bodies (i.e. to one another) by way of the first joining surface.

It will be appreciated that the first joining surface is a (i.e. external) surface of the first component body to be joined to the second component body.

The inventors have found that cold-spraying the first joining surface with the bond material which is harder than the first joining surface (i.e. prior to cold-spraying with the bond material) facilitates joining of the first and second component bodies by way of the first joining surface.

It will be appreciated that the hardness of a material or a surface may be characterised by many different methods, such as by scratch hardness testing (for example, on the Mohs scale), by indentation hardness testing (for example, on the Rockwell, Vickers, Shore or Brinell scales), or by rebound hardness testing (for example, using the Leeb rebound hardness test).

It may therefore be that the hardness of the first surface and/or the bond material is the indentation hardness of the said surface and/or the bond material. In particular, it may be that the hardness of the first surface and/or the bond material is a Vickers hardness of the first surface and/or the bond material.

It may be that a difference between the Vickers hardness of the bond material and the Vickers hardness of the first joining surface is at least 100 HV, for example at least 150 HV, when measured under the same conditions.

The second component body may comprise a second joining surface. It will be appreciated that the second joining surface is a (i.e. external) surface of the second component body to be joined to the first component body. Accordingly, the method may comprise joining the first and second component bodies to one another by way of the first and second joining surfaces, for example by joining the first and second joining surfaces to one another.

The bond material may be harder than the second joining surface (i.e. when measured under the same conditions). It may be that the hardness of the second joining surface is the indentation hardness of the second joining surface. In particular, it may be that the hardness of the second joining surface is a Vickers hardness of the second joining surface. It may be that the difference between a Vickers hardness of the bond material and a Vickers hardness of the second joining surface is at least 100 HV, for example at least 150 HV, when measured under the same conditions.

In some examples, the method comprises cold-spraying the bond material onto and between the first and second joining surfaces. Cold-spraying the bond material onto and between the first and second joining surfaces may (e.g. directly) form a joint (i.e. a joint between the first and second component bodies). For example, cold-spraying the bond material onto and between the first and second joining surfaces may form a bond region of bond material between the first and second joining surfaces, thereby joining the first and second component bodies to one another (i.e. thereby forming the joint). The bond region of bond material may directly connect the first and second joining surfaces.

Cold-spraying the bond material onto and between the first and second joining surfaces may comprise cold-spraying the bond material into a space (e.g. a gap) between the first and second component bodies, wherein the first and second joining surfaces each define (e.g. opposing) boundaries of the space (e.g. the gap). For example, the method may comprise: arranging the first and second component bodies such that the first and second joining surfaces face one another and are spaced apart from one another to form a gap; and cold-spraying the bond material into the gap (i.e. to form the joint).

Cold-spraying the bond material onto and between the first and second joining surfaces may comprise cold-spraying the bond material across an interface between the first and second joining surfaces. Cold-spraying the bond material across an interface between the first and second joining surfaces may comprise forming a layer of bond material which extends across the interface between the first and second joining surfaces. For example, the method may comprise: arranging the first and second component bodies such that an edge of one of the first and second joining surfaces abuts (a) an edge of the other of the first and second joining surfaces or (b) the other of the first and second joining surfaces (i.e. wherein the region in which the edge of the one of the first and second joining surfaces abuts (a) the edge of the other of the first and second joining surface or (b) the other of the first and second joining surfaces comprises (e.g. defines or is) an interface between the first and second joining surfaces); and cold-spraying the bond material onto the first and second joining surfaces to form a layer of bond material which extends continuously across the first and second joining surfaces (i.e. such that the layer of bond material extends across the interface). The first and second joining surfaces (i.e. the first and second component bodies) may be joined to one another by way of the layer bond material.

The first and second joining surfaces may be arranged at any angle relative to one another. For example, the first and second joining surfaces may be substantially parallel (e.g. the first and second component bodies may be arranged such that an edge of the first joining surface abuts and is substantially parallel to an edge of the second joining surface or such that the first and second joining surfaces face one another). Alternatively, the first and second joining surfaces may be inclined relative to one another at a non-zero angle. For example the first and second joining surfaces may be inclined relative to one another at an oblique angle or the first and second joining surfaces may be arranged substantially perpendicular to one another.

The inventors have found that cold-spraying the bond material onto and between the first and second joining surfaces to join the first and second component bodies together results in improved adhesion of the first and second component bodies to one another.

Without wishing to be bound by theory, the inventors posit that, because the bond material is harder than the first joining surface, the first joining surface is deformed plastically during cold-spraying the bond material, leading to mechanical interlocking of the first joining surface and the bond material. This mechanical interlocking results in strong adhesion between the first joining surface and the bond material. The method is particularly effective in examples in which the first joining surface (i.e. prior to cold-spraying) comprises (e.g. consists of) a relatively soft material, such as a material not suitable for use with other component joining methods (e.g. welding). The method may therefore be used to join first and second component bodies made of different materials, for example wherein the first component body (or at least the first joining surface thereof) is made of a relatively softer material (e.g. a material not suitable for welding) and the second component body (or at least the second joining surface thereof) is made of a relatively harder material. The method is therefore suitable for use in joining first and second component bodies made of dissimilar materials.

In embodiments in which the bond material is also harder than the second joining surface, it may be that both the first joining surface and the second joining surface are deformed plastically during cold-spraying the bond material, leading to mechanical interlocking of the bond material with the first joining surface and the second joining surface. This mechanical interlocking results in strong adhesion between both the first and second joining surfaces and the bond material. This method is particularly effective in examples in which both the first joining surface (i.e. prior to cold-spraying) and the second joining surface (i.e. prior to cold-spraying) comprise (e.g. consist of) relatively soft materials, such as materials not suitable for use with other component joining methods (e.g. welding).

It will be appreciated that cold-spraying is a method for spray-coating a substrate (such as a surface of a component body) with a material. In particular, cold-spraying involves spraying the substrate with powdered material which is accelerated in a supersonic gas jet under such conditions that the powdered material does not melt during the spraying process (i.e. particles of the powdered material are solid immediately prior to impacting the substrate). On impact with the surface, the particles of the powdered material deform plastically, particularly through adiabatic shearing, causing the powdered material to flow locally and bond with the substrate. Cold-spraying may be highpressure cold-spraying (HPCS), which makes use of working gas pressures above about 1.5 MPa (and commonly up to about 7.0 MPa) and working gas pre-heated temperatures up to about 1100°C, or low-pressure cold-spraying (LPCS), which makes use of working gas pressures from about 0.5 MPa to about 1.0 MPa and working gas pre-heated temperatures lower than about 550°C. HPCS is particularly suitable for cold-spraying metals requiring higher critical velocities, such as Ti-based alloys or Ni-based superalloys. LPCS is particularly suitable for cold-spraying metals requiring lower critical velocities, such as Al-based or Cu-based alloys.

In examples in which the method comprises cold-spraying the bond material onto and between the first and second joining surfaces to form a joint (i.e. between the first and second component bodies), the method may further comprise heating the joint (i.e. the bond region of bond material and optionally adjacent portions of the first and second component bodies). The inventors have found that heating the joint further increases the adhesion of the bond material to the first and/or second joining surfaces and improves the mechanical stability of the joint. Without wishing to be bound by theory, the inventors posit that heating the joint relaxes residual stresses in the structure and/or promotes diffusion of material which enhances adhesion.

It may be that heating the joint comprises heating the joint for at least 30 minutes, for example, for at least 1 hour, or for at least 2 hours, or for at least 4 hours. It may be necessary to heat the joint for a minimum period of time in order to achieve an enhancement in adhesion (for example, in order to enable sufficient diffusion to take place). It may be that heating the joint (i.e. within the context of the heat treatment) comprises heating the joint for no more than about 1 day, for example, no more than about 12 hours.

It may be that heating the joint comprises holding the joint at a temperature no less than about 200°C, for example, no less than about 300°C, or no less than about 400°C, or no less than about 500°C. It may be that heating the joint comprises holding the joint at a temperature no greater than about 1000°C, for example, no greater than about 900°C, or no greater than about 800°C, or no greater than about 700°C, or no greater than about 600°C, or no greater than about 500°C. It may be that heating the joint comprises holding the joint at a temperature from about 200°C to about 1000°C, for example from about 200°C to about 900°C, or from about 200°C to about 800°C, or from about 200°C to about 700°C, or from about 200°C to about 600°C, or from about 200°C to about 500°C, or from about 300°C to about 1000°C, or from about 300°C to about 900°C, or from about 300°C to about 800°C, or from about 300°C to about 700°C, or from about 300°C to about 600°C, or from about 300°C to about 500°C, or from about 400°C to about 1000°C, or from about 400°C to about 900°C, or from about 400°C to about 800°C, or from about 400°C to about 700°C, or from about 400°C to about 600°C, or from about 400°C to about 500°C, or from about 500°C to about 1000°C, or from about 500°C to about 900°C, or from about 500°C to about 800°C, or from about 500°C to about 700°C, or from about 500°C to about 600°C. The method may comprise holding the joint at a temperature at which residual stress relaxation and/or diffusion takes place. However, the temperature at which the joint is held should generally not be sufficiently high as to promote phase transformations (including changes of state (e.g. melting) or solid-solid phase transformations (e.g. changes in crystal structure)) in any of the bond material or the first or second component bodies. It may be that the first and second joining surfaces comprise (e.g. consist of or are formed from) the same materials. For example, it may be that a first joining surface portion of the first component body (for example, the first joining surface of the first component body, and optionally a portion of the first component body extending away from the first joining surface (i.e. into the first component body)) and a second joining surface portion of the second component body (for example, the second joining surface of the second component body, and optionally a portion of the second component body extending away from the second joining surface (i.e. into the second component body)) comprise (e.g. consist of or are formed from) the same materials.

Alternatively, it may be that the first and second joining surfaces comprise (e.g. consist of or are formed from) different materials. For example, it may be that the first joining surface portion of the first component body and the second joining surface portion of the second component body comprise (e.g. consist of or are formed from) different materials.

One or both of the first joining surface and the second joining surface (e.g. the first joining surface portion and the second joining surface portion) may (each) comprise (e.g. consist of) a metal or a metal alloy. The metal may be a transition metal and/or the metal alloy may be a transition metal-based alloy (i.e. an alloy based predominantly on a transition metal). Alternatively, the metal may be a post-transition metal and/or the metal alloy may be a post-transition metal-based alloy (i.e. an alloy based predominantly on a post-transition metal).

By the term "transition metal", a metal selected from the d-block (i.e. groups 3 to 12) of the periodic table of elements will be understood. Transition metals include scandium, titanium, vanadium, chromium, manganese, iron, cobalt, nickel, copper, zinc, yttrium, zirconium, niobium, molybdenum, technetium, ruthenium, rhodium, palladium, silver, cadmium, lanthanum, hafnium, tantalum, tungsten, rhenium, osmium, iridium, platinum, gold and mercury.

By the term "post-transition metal", a metal selected from the p-block (i.e. groups 13 to 18) of the periodic table of elements will be understood. Post-transition metals include gallium, indium, thallium, tin, lead, bismuth, aluminium, selenium and polonium.

For the avoidance of doubt, one or both of the first joining surface and the second joining surface (e.g. the first joining surface portion and the second joining surface portion) may (each) comprise (e.g. consist of) one or more of the following: scandium, titanium, vanadium, chromium, manganese, iron, cobalt, nickel, copper, zinc, yttrium, zirconium, niobium, molybdenum, technetium, ruthenium, rhodium, palladium, silver, cadmium, lanthanum, hafnium, tantalum, tungsten, rhenium, osmium, iridium, platinum, gold, mercury, gallium, indium, thallium, tin, lead, bismuth, aluminium, selenium and polonium.

One or both of the first joining surface and the second joining surface (e.g. the first joining surface portion and the second joining surface portion) may (each) comprise a non-metallic, intermetallic, ceramic or oxide phase. The one or both of the first joining surface and the second joining surface (e.g. the first joining surface portion and the second joining surface portion) may (each) comprise the non-metallic, intermetallic, ceramic or oxide phase in addition to the metal or metal alloy as discussed hereinabove. Indeed, the non-metallic, intermetallic, ceramic or oxide phase may form part of a metal alloy.

Cold-spraying the first joining surface, and optionally the second joining surface, with the bond material may be particularly effective in facilitating joining and/or improving adhesion between the first and second component bodies when the first joining surface (e.g. the first joining surface portion), and optionally the second joining surface (e.g. the second joining surface portion), comprises (e.g. consists of or is formed from) a material comprising a non-metallic, intermetallic, ceramic or oxide phase.

The bond material may comprise (e.g. be) a metal or metal alloy.

The metal may be a transition metal and/or the metal alloy may be a transition metal-based alloy (i.e. an alloy based predominantly on a transition metal). For example, the bond material may comprise (e.g. consist of) scandium, titanium, vanadium, chromium, manganese, iron, cobalt, nickel, copper, zinc, yttrium, zirconium, niobium, molybdenum, technetium, ruthenium, rhodium, palladium, silver, cadmium, lanthanum, hafnium, tantalum, tungsten, rhenium, osmium, iridium, platinum, gold and/or mercury. The bond material may comprise (e.g. consist of) an alloy comprising (e.g. based (i.e. predominantly) on) scandium, titanium, vanadium, chromium, manganese, iron, cobalt, nickel, copper, zinc, yttrium, zirconium, niobium, molybdenum, technetium, ruthenium, rhodium, palladium, silver, cadmium, lanthanum, hafnium, tantalum, tungsten, rhenium, osmium, iridium, platinum, gold and/or mercury. Alternatively, the metal may be a post-transition metal and/or the metal alloy may be a post-transition metal-based alloy (i.e. an alloy based predominantly on a post-transition metal). For example, the bond material may comprise (e.g. consist of) gallium, indium, thallium, tin, lead, bismuth, aluminium, selenium and/or polonium. The bond material may comprise (e.g. consist of) an alloy comprising (e.g. based (i.e. predominantly) on) gallium, indium, thallium, tin, lead, bismuth, aluminium, selenium and/or polonium.

The bond material may comprise (e.g. consist of) aluminium or an aluminium-based alloy. The aluminium-based alloy may contain one or more metals, such as magnesium, in addition to aluminium. Additionally or alternatively, the aluminium-based alloy may contain one or more non-metals, such as silicon, in addition to aluminium. For example, the aluminium-based alloy may contain magnesium and silicon in addition to aluminium (for example, the aluminium-based alloy may be an Al-6061 alloy).

The bond material may comprise (e.g. consist of) cobalt or a cobalt-based alloy. The cobalt-based alloy may contain one or more transition metals in addition to cobalt. For example, the cobalt-based alloy may be a cobalt-chromium (Co-Cr) alloy, a cobalt-chromium-molybdenum (Co-Cr-Mo) alloy, or a cobalt-chromium-tungsten (Co-Cr-W) alloy.

The bond material may comprise (e.g. consist of) titanium or a titanium-based alloy. The titanium-based alloy may contain one or more metals in addition to titanium. For example, the titanium alloy may be a titanium-aluminium-vanadium (Ti-AI-V) alloy such as Ti-6AI-V.

The bond material may comprise (e.g. consist of) a ceramic. The ceramic may be an oxide, for example a metal oxide. For example, the bond material may comprise (e.g. consist of) aluminium oxide, i.e. alumina (Al₂O₃)-

The bond material may be a mixture. For example, the bond material may comprise (e.g. be a mixture of) two or more different substances. For example, the bond material may comprise a metal or metal alloy and a ceramic. For example, the bond material may comprise aluminium or an aluminium-based alloy (e.g. AI-6061) and aluminium oxide, i.e. alumina (Al₂O₃).

In some examples, the method comprises joining the first and second component bodies together by a secondary joining process in addition to the step of cold-spraying. The secondary joining process may be a welding, brazing or soldering process. For example, the method may comprise welding, brazing or soldering the first and second component bodies together.

In some examples, the method comprises: cold-spraying the first joining surface with the bond material to form a first bond coating; and joining the first bond coating to the second component body (for example, by the secondary joining process (e.g. welding, brazing or soldering)). For example, the method may comprise joining (e.g. welding, brazing or soldering) the first bond coating directly to the second joining surface of the second component body. Alternatively, the method may comprise: cold-spraying the second joining surface of the second component body with the bond material to form a second bond coating; and joining the first bond coating to the second bond coating (for example, by the secondary joining process (e.g. welding, brazing or soldering)).

For the avoidance of doubt, the method may comprise: cold-spraying the first joining surface with the bond material to form the first bond coating; and welding the first bond coating (e.g. directly) to the second component body. Alternatively, the method may comprise: cold-spraying the first joining surface with the bond material to form the first bond coating; cold-spraying the second joining surface with the bond material to form the second bond coating; and welding the first bond coating to the second bond coating.

It will be appreciated that 'welding' is a joining process in which two or more bodies are joined by: melting parts of the bodies together by the application of heat; and allowing the molten material to cool to form a weld. Any suitable welding process known in the art may be used, dependent on the particular bond material selected. For example, it may be that welding comprises any of arc welding, gas welding, resistance welding, friction welding, electron beam welding or laser welding.

The method may further comprise heating (i.e. subjecting to a heat treatment) the first bond coating and/or (where present) the second bond coating prior to joining (e.g. by welding). The inventors have found that heating the first and/or second bond coatings further increases the adhesion of the bond coatings to the first and/or second joining surfaces and improves the mechanical stability of the joint. Without wishing to be bound by theory, the inventors posit that heating the first and/or second bond coatings relaxes residual stresses in the structure and/or promotes diffusion of material which enhances adhesion.

It may be that heating the first and/or second bond coating comprises heating the respective bond coating for at least 30 minutes, for example, for at least 1 hour, or for at least 2 hours, or for at least 4 hours. It may be necessary to heat the bond coating for a minimum period of time in order to achieve an enhancement in adhesion (for example, in order to enable sufficient diffusion to take place). It may be that heating the first and/or second bond coating (i.e. within the context of the heat treatment) comprises heating the respective bond coating for no more than about 1 day, for example, no more than about 12 hours.

It may be that heating the first and/or second bond coating comprises holding the respective bond coating at a temperature no less than about 200°C, for example, no less than about 300°C, or no less than about 400°C, or no less than about 500°C. It may be that heating the first and/or second bond coating comprises holding the respective coating at a temperature no greater than about 1000°C, for example, no greater than about 900°C, or no greater than about 800°C, or no greater than about 700°C, or no greater than about 600°C, or no greater than about 500°C. It may be that heating the first and/or second bond coating comprises holding the respective coating at a temperature from about 200°C to about 1000°C, for example from about 200°C to about 900°C, or from about 200°C to about 800°C, or from about 200°C to about 700°C, or from about 200°C to about 600°C, or from about 200°C to about 500°C, or from about 300°C to about 1000°C, or from about 300°C to about 900°C, or from about 300°C to about 800°C, or from about 300°C to about 700°C, or from about 300°C to about 600°C, or from about 300°C to about 500°C, or from about 400°C to about 1000°C, or from about 400°C to about 900°C, or from about 400°C to about 800°C, or from about 400°C to about 700°C, or from about 400°C to about 600°C, or from about 400°C to about 500°C, or from about 500°C to about 1000°C, or from about 500°C to about 900°C, or from about 500°C to about 800°C, or from about 500°C to about 700°C, or from about 500°C to about 600°C. The method may comprise holding the first and/or second bond coating at a temperature at which residual stress relaxation and/or diffusion takes place. However, the temperature at which the first and/or second bond coating is held should generally not be sufficiently high as to promote phase transformations (including changes of state (e.g. melting) or solid-solid phase transformations (e.g. changes in crystal structure)) in any of the bond material or the first or second component bodies.

It may be that the method comprises mechanically preparing the first joining surface and/or the second joining surface prior to cold-spraying the bond material. Mechanically preparing the first joining surface and/or the second joining surface may comprise (e.g. consist of) grinding, milling or polishing the respective joining surface, for example to remove material from the respective joining surface.

The first and second component bodies may be first and second structural component bodies (e.g. for a machine). Each structural component body may be a vehicle component body (i.e. a structural component body for a vehicle) such as a motor vehicle component body, a railed vehicle component body, a watercraft component body, an aircraft component body or a spacecraft component body. Each structural component body may be an engine component body.

One of the first and second component bodies may be a fastener (e.g. a mechanical fastener) such as a rivet, bolt or screw. Accordingly, the method may extend to joining first, second and third component bodies to one another, wherein the first component bodies is a fastener and the second and third component bodies are non-fastener structural component bodies. For example, the method may comprise: fastening the second and third component bodies to one another by way of the first component body (i.e. the fastener); and cold-spraying a first joining surface of the first component body (i.e. the fastener) and a second joining surface of the second component body with the bond material to form a layer of bond material which joins the first and second component bodies to one another. For example, the method may comprise: riveting the second and third component bodies to one another by way of a rivet; and cold-spraying a surface of the rivet and a surface of the second component body with the bond material to form a layer of bond material which joins the rivet and the second component body to one another.

Joining the first and second component bodies may form part of (e.g. constitute) a method of manufacturing a component from the first and second component bodies. For example, the method may be a method of manufacturing a structural component such as a vehicle component, for example a motor vehicle component, a railed vehicle component, a watercraft component, an aircraft component or a spacecraft component. The method may be a method of manufacturing an engine component.

In a second aspect, there is provided a component manufactured (i.e. at least in part) by joining first and second component bodies by the method according to the first aspect.

The component may be a structural component (e.g. for a machine). The structural component may be a vehicle component (i.e. a structural component of a vehicle) such as a motor vehicle component, a railed vehicle component, a watercraft component, an aircraft component or a spacecraft component. The structural component may be an engine component.

In a third aspect, there is provided a component comprising: a first component body and a second component body joined to one another at a joint by a region of bond material in direct contact with (i.e. both of) the first component body and the second component body; wherein the first component body comprises a first body material, the second component body comprises a second body material, and the bond material is harder than the first body material when measured under the same conditions.

It may be that the hardness of the first body material and/or the bond material is the indentation hardness of the first body material and/or the bond material. In particular, it may be that the hardness of the first body material and/or the bond material is a Vickers hardness of the first body material and/or the bond material.

It may be that the Vickers hardness of the bond material is at least 100 HV greater, for example at least 150 HV greater, than the Vickers hardness of the first body material when measured under the same conditions.

It may be that the bond material is harder than the second body material when measured under the same conditions. It may be that the hardness of the second body material is the indentation hardness of the second body material. In particular, it may be that the hardness of the second body material is a Vickers hardness of the second body material.

It may be that the Vickers hardness of the bond material is at least 100 HV greater, for example at least 150 HV greater, than the Vickers hardness of the second body material when measured under the same conditions.

It may be that the joint comprises a weld. It may be that the region of bond material comprises the weld. It may be that the weld extends into one or both of the first component body and the second component body. For example, it may be that a heat-affected zone (HAZ) of the weld extends into one or both of the first component body and the second component body. Alternatively, it may be that the heat-affected zone (HAZ) of the weld is restricted to the region of bond material, i.e. such that the heat-affected zone (HAZ) of the weld does not extend into the first component body or the second component body.

The skilled person will appreciate that the presence of a weld, or a HAZ associated with a weld, can be determined experimentally by standard metallographic methods, for example by examining the microstructure of a metallographic section through the joint in an optical microscope following appropriate metallographic preparation (e.g. grinding, polishing and etching).

It may be that the first body material and the second body material are the same. Accordingly, it may be that the difference in (e.g. Vickers) hardness between the bond material and the first body material is the same as the difference in (e.g. Vickers) hardness between the bond material and the second body material, i.e. it may be that the first and second body materials have the same (e.g. Vickers) hardness.

Alternatively, it may be that the first body material and the second body material are different. Accordingly, it may be that the difference in (e.g. Vickers) hardness between the bond material and the first body material is different from the difference in (e.g. Vickers) hardness between the bond material and the second body material, i.e. it may be that the first and second body materials have different (e.g. Vickers) hardnesses.

One or both of the first body material and the second body material may (each) be a metal or a metal alloy. The metal may be a transition metal and/or the metal alloy may be a transition metal-based alloy (i.e. an alloy based predominantly on a transition metal). Alternatively, the metal may be a post-transition metal and/or the metal alloy may be a post-transition metal-based alloy (i.e. an alloy based predominantly on a post-transition metal).

For example, one or both of the first body material and the second body material may comprise or be selected from: scandium, titanium, vanadium, chromium, manganese, iron, cobalt, nickel, copper, zinc, yttrium, zirconium, niobium, molybdenum, technetium, ruthenium, rhodium, palladium, silver, cadmium, lanthanum, hafnium, tantalum, tungsten, rhenium, osmium, iridium, platinum, gold and mercury. Additionally or alternatively, one or both of the first body material and the second body material may comprise or be selected from: gallium, indium, thallium, tin, lead, bismuth, aluminium, selenium and polonium. Accordingly, one or both of the first body material and the second body material may comprise or be selected from: scandium, titanium, vanadium, chromium, manganese, iron, cobalt, nickel, copper, zinc, yttrium, zirconium, niobium, molybdenum, technetium, ruthenium, rhodium, palladium, silver, cadmium, lanthanum, hafnium, tantalum, tungsten, rhenium, osmium, iridium, platinum, gold, mercury, gallium, indium, thallium, tin, lead, bismuth, aluminium, selenium and polonium.

It may be that one or both of the first body material and the second body material comprises a non-metallic, intermetallic, ceramic or oxide phase. For example, the non-metallic, intermetallic, ceramic or oxide phase may form part of a metal alloy.

The bond material may comprise (e.g. be) a metal or metal alloy. The metal may be a transition metal and/or the metal alloy may be a transition metal-based alloy (i.e. an alloy based predominantly on a transition metal). By the term "transition metal", a metal selected from the d-block (i.e. groups 3 to 12) of the periodic table of elements will be understood. For example, the bond material may comprise (e.g. consist of) scandium, titanium, vanadium, chromium, manganese, iron, cobalt, nickel, copper, zinc, yttrium, zirconium, niobium, molybdenum, technetium, ruthenium, rhodium, palladium, silver, cadmium, lanthanum, hafnium, tantalum, tungsten, rhenium, osmium, iridium, platinum, gold and/or mercury. The bond material may comprise (e.g. consist of) an alloy comprising (e.g. based (i.e. predominantly) on) scandium, titanium, vanadium, chromium, manganese, iron, cobalt, nickel, copper, zinc, yttrium, zirconium, niobium, molybdenum, technetium, ruthenium, rhodium, palladium, silver, cadmium, lanthanum, hafnium, tantalum, tungsten, rhenium, osmium, iridium, platinum, gold and/or mercury. Alternatively, the metal may be a post-transition metal and/or the metal alloy may be a post-transition metal-based alloy (i.e. an alloy based predominantly on a post-transition metal). For example, the bond material may comprise (e.g. consist of) gallium, indium, thallium, tin, lead, bismuth, aluminium, selenium and/or polonium. The bond material may comprise (e.g. consist of) an alloy comprising (e.g. based (i.e. predominantly) on) gallium, indium, thallium, tin, lead, bismuth, aluminium, selenium and/or polonium.

The bond material may comprise (e.g. consist of) aluminium or an aluminium-based alloy. The aluminium-based alloy may contain one or more metals, such as magnesium, in addition to aluminium. Additionally or alternatively, the aluminium-based alloy may contain one or more non-metals, such as silicon, in addition to aluminium. For example, the aluminium-based alloy may contain magnesium and silicon in addition to aluminium (for example, the aluminium-based alloy may be an Al-6061 alloy).

The bond material may comprise (e.g. consist of) cobalt or a cobalt-based alloy. The cobalt-based alloy may contain one or more transition metals in addition to cobalt. For example, the cobalt-based alloy may be a cobalt-chromium (Co-Cr) alloy, a cobalt-chromium-molybdenum (Co-Cr-Mo) alloy, or a cobalt-chromium-tungsten (Co-Cr-W) alloy.

The bond material may comprise (e.g. consist of) titanium or a titanium-based alloy. The titanium-based alloy may contain one or more metals in addition to titanium. For example, the titanium alloy may be a titanium-aluminium-vanadium (Ti-AI-V) alloy such as Ti-6AI-V.

The bond material may comprise (e.g. consist of) a ceramic. The ceramic may be an oxide, for example a metal oxide. For example, the bond material may comprise (e.g. consist of) aluminium oxide, i.e. alumina (Al₂O₃)-

The bond material may be a mixture. For example, the bond material may comprise (e.g. be a mixture of) two or more different substances. For example, the bond material may comprise a metal or metal alloy and a ceramic. For example, the bond material may comprise aluminium or an aluminium-based alloy (e.g. AI-6061) and aluminium oxide, i.e. alumina (Al₂O₃).

The component may be a structural component (e.g. for a machine). The structural component may be a vehicle component (i.e. a structural component of a vehicle) such as a motor vehicle component, a railed vehicle component, a watercraft component, an aircraft component or a spacecraft component. The structural component may be an engine component.

The first component body may be a fastener (e.g. a mechanical fastener) such as a rivet, bolt or screw. The second component body may be a non-fastener component body. The first component body (i.e. the fastener, e.g. rivet) may fasten the second component body to a third non-fastener component body. The region of bond material may extend across (i.e. in direct contact with) a surface of the first component body (i.e. the fastener, e.g. rivet) and a surface of the second component body.

The skilled person will appreciate that, except where mutually exclusive, a feature described in relation to any one of the above aspects may be applied *mutatis mutandis* to any other aspect. Furthermore, except where mutually exclusive, any feature described herein may be applied to any aspect and/or combined with any other feature described herein.

### Brief description of the drawings

Embodiments will now be described by way of example only, with reference to the Figures, in which:
**Figures 1 (a)** to **(c)** illustrate schematically, in sectional side views, a first example process of joining first and second component bodies by cold-spraying;
**Figures 2 (a)** to **(c)** illustrate schematically, in sectional side views, a second example process of joining first and second component bodies by cold-spraying;
**Figures 3 (a)** to **(c)** illustrate schematically, in sectional side views, a third example process of joining first and second component bodies by cold-spraying;
**Figures 4 (a)** to **(c)** illustrate schematically, in sectional side views, a fourth example process of joining first and second component bodies by cold-spraying;
**Figures 5 (a)** to **(c)** illustrate schematically, in sectional side views, a fifth example process of joining first and second component bodies by cold-spraying;
**Figure 6** is a flowchart illustrating a cold-spraying method;
**Figure 7** is a photograph of a flat rivet joined to a portion of a fan containment case for a gas turbine engine by cold-spraying;
**Figure 8** is a photograph of a sample prepared for metallographic analysis showing a section through the flat rivet and the fan containment case of Figure 7;
**Figure 9** is an optical micrograph (following grinding, polishing and etching) of a portion of the sample shown in Figure 7 at an interface between fan containment case material, rivet material and a cold-sprayed bond material;
**Figure 10** is an enlarged image of a portion of the interface between fan containment case material and cold-sprayed bond material shown in Figure 9;
**Figure 11** is an enlarged image of a portion of the interface between rivet material and cold-sprayed bond material shown in Figure 9;
**Figure 12** is a photograph of a topped rivet joined to a portion of a fan containment case for a gas turbine engine by cold-spraying;
**Figure 13** is a photograph of a sample prepared for metallographic analysis showing a section through the topped rivet and the fan containment case of Figure 12;
**Figure 14** is an optical micrograph (following grinding, polishing and etching) of a portion of the sample shown in Figure 13 at an interface between cold-sprayed bond material and fan containment case material;
**Figure 15** is an optical micrograph (following grinding, polishing and etching) of a portion of the sample shown in Figure 13 at an interface between cold-sprayed bond material and rivet material;
**Figure 16** is an optical micrograph (following grinding, polishing and etching) of a portion of the sample shown in Figure 13 at a corner where cold-sprayed bond material, fan containment case material and rivet material meet; and
**Figure 17** is an SEM image of an interface between a cold-sprayed coating of a cobalt-chromium-molybdenum alloy and an aluminium alloy (AI-6061) substrate.

### Detailed description

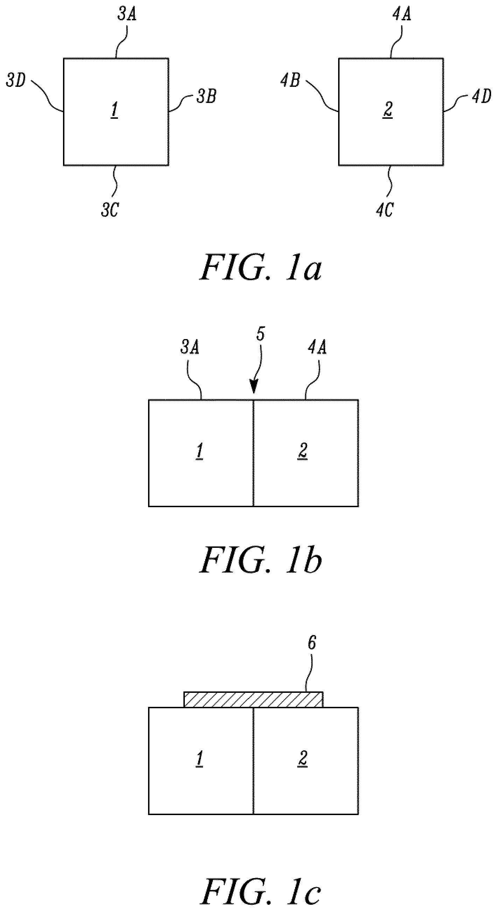

A first example method of joining a component body 1 and a component body 2 to one another is illustrated schematically by way of Figures 1 (a) to (c).

Figure 1 (a) shows component bodies 1 and 2 in cross-section. Surfaces 3A, 3B, 3C and 3D of component body 1 and surfaces 4A, 4B, 4C and 4D of component body 2 are visible in Figure 1 (a).

In a first joining step, component bodies 1 and 2 are brought together such that surfaces 3B and 4B abut one another, as shown in Figure 1 (b). In this configuration, edges of surfaces 3A and 3B also abut one another at an interface 5.

In a subsequent cold-spraying step, as illustrated in Figure 1 (c), a bond coating 6 is formed on the surfaces 3A and 4A, across the interface 5, by cold-spraying a bond material. The bond coating 5 adheres to surfaces 3A and 4A and therefore forms a joint between the component bodies 1 and 2 which holds them together.

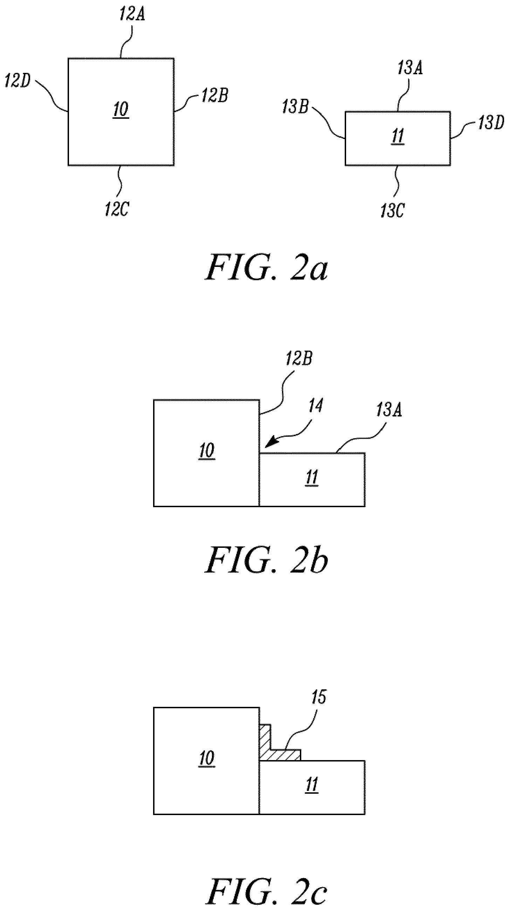

A second example method of joining a component body 10 and a component body 11 to one another is illustrated schematically by way of Figures 2 (a) to (c).

Figure 2 (a) shows component bodies 10 and 11 in cross-section. Surfaces 12A, 12B, 12C and 12D of component body 11 and surfaces 13A, 13B, 13C and 13D of component body 11 are visible in Figure 2 (a).

In a first joining step, component bodies 10 and 11 are brought together such that surfaces 12B and 13B abut one another, as shown in Figure 1 (b). In this configuration, an edge of surface 13A abuts surface 12B at an interface 14.

In a subsequent cold-spraying step, as illustrated in Figure 2 (c), a bond coating 15 is formed on the surfaces 12B and 13A, across the interface 14, by cold-spraying a bond material. The bond coating 15 adheres to surfaces 12B and 13A and therefore forms a joint between the component bodies 10 and 11 which holds them together.

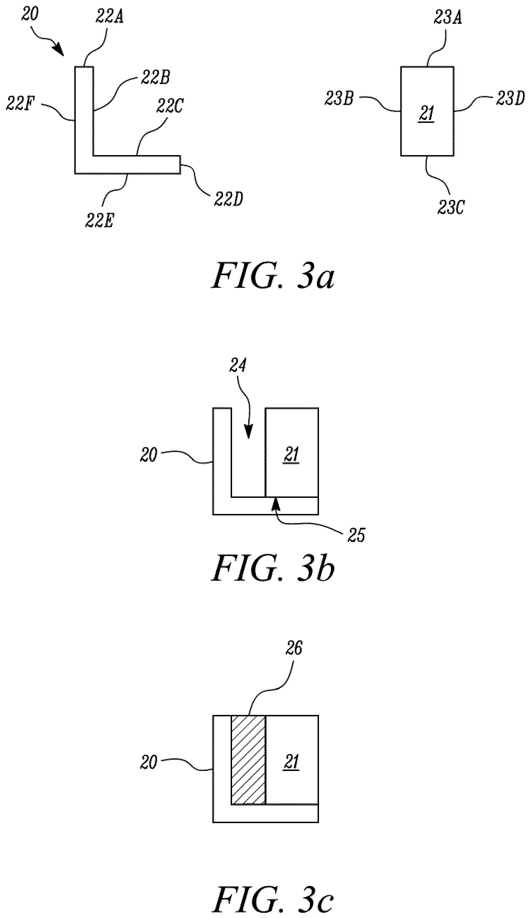

A third example method of joining a component body 20 and a component body 21 to one another is illustrated schematically by way of Figures 3 (a) to (c).

Figure 3 (a) shows component bodies 20 and 21 in cross-section. Surfaces 22A, 22B, 22C, 22D, 22E and 22F of component body 21 and surfaces 23A, 23B, 23C and 23D of component body 21 are visible in Figure 3 (a).

In a first joining step, component bodies 20 and 21 are brought together such that surfaces 22C and 23C abut one another, as shown in Figure 3 (b). In this configuration, a space 24 is enclosed on three sides by portions of surfaces 22B, 22C and 23B. An edge of surface 23B also abuts surface 22B at an interface 25.

In a subsequent cold-spraying step, as illustrated in Figure 3 (c), a bond material 26 is cold-sprayed into the space 24. The bond material 26 adheres to exposed portions of the surfaces 22B, 22C and 23B and substantially fills the space 24, thereby forming a joint between the component bodies 20 and 21 which holds them together.

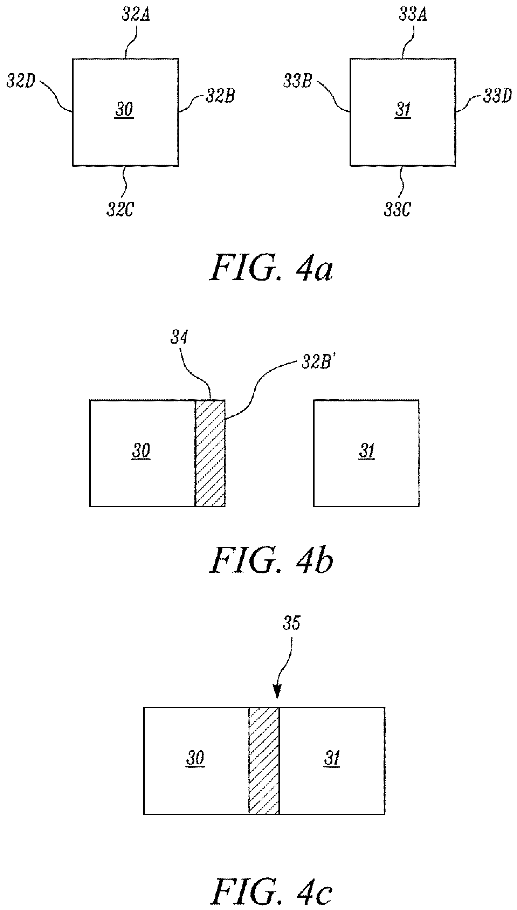

A fourth example method of joining a component body 30 and a component body 31 to one another is illustrated schematically by way of Figures 4 (a) to (c).

Figure 4 (a) shows component bodies 30 and 31 in cross-section. Surfaces 32A, 32B, 32C and 32D of component body 30 and surfaces 33A, 33B, 33C and 33D of component body 31 are visible in Figure 4 (a).

In a cold-spraying step, as illustrated in Figure 4 (b), a bond coating 34 is formed on surface 32B of component body 30. The bond coating 34 adheres to the surface 32B. An external surface of the bond coating is labelled as 32B' in Figure 4 (b).

In a joining step, as illustrated in Figure 4 (c), component bodies 30 and 31 are joined to one another by: bringing the component bodies 30 and 31 together such that surfaces 32B' and 33B abut one another at an interface 35; and welding the bond coating 34 to the component body 31 at the interface 35.

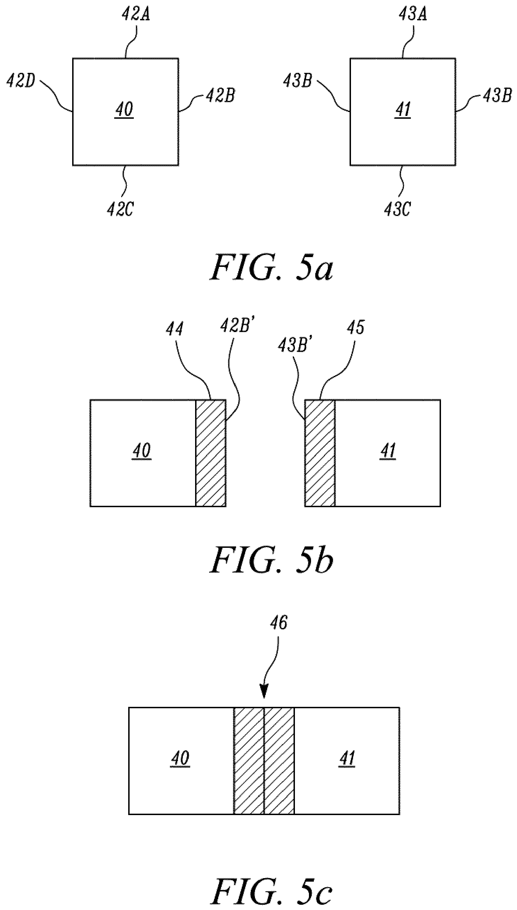

A fifth example method of joining a component body 40 and a component body 41 to one another is illustrated schematically by way of Figures 5 (a) to (c).

Figure 5 (a) shows component bodies 40 and 41 in cross-section. Surfaces 42A, 42B, 42C and 42D of component body 40 and surfaces 43A, 43B, 43C and 43D of component body 41 are visible in Figure 5 (a).

In a cold-spraying step, as illustrated in Figure 4 (b), a bond coating 44 of bond material is formed on surface 42B of component body 40 by cold-spraying and a bond coating 45 of bond material is formed on surface 43B of component body 41 by cold-spraying. The bond coating 44 adheres to the surface 32B and an external surface of the bond coating 44 is therefore labelled as 42B' in Figure 5 (b). Similarly, the bond coating 45 adheres to the surface 43B, and an external surface of the bond coating 45 is therefore labelled as 43B' in Figure 5 (b).

In a joining step, as illustrated in Figure 5 (c), component bodies 40 and 41 are joined to one another by: bringing the component bodies 40 and 41 together such that surfaces 42B' and 43B' abut one another at an interface 46; and welding the bond coating 44 to the bond coating 45 at the interface 46. Welding bond coating 44 to bond coating 45 results in the formation of a continuous region of bond material joining component bodies 40 and 41.

For each of the first to fifth methods, it will be appreciated that different bond materials may be selected for different applications. However, the inventors have found that, in order to achieve good adhesion (and therefore a stronger joint between the component bodies), the bond material should be harder than the material from which at least one of the component bodies is formed. An even stronger joint between the component bodies may be achieved when the bond material is harder than the materials from which both component bodies are formed. In particular, the Vickers hardness of the bond material should be about 100 HV, for example about 150 HV, higher than the Vickers hardness of the surface of one of (or, more advantageously, both of) the component bodies to be cold-sprayed. Suitable bond materials include metals or metal alloys (such as AI-, Co- or Ti-based alloys (for example, a Co-Cr-W alloy)) or ceramics (such as alumina).

In any of the first to fifth methods, surfaces may be mechanically prepared prior to cold-spraying. For example, surfaces may be mechanically prepared using milling, grinding, sand blasting and/or polishing processes.

In any of the first to fifth methods, a heat treatment may be performed following cold-spraying. For example, cold-sprayed component bodies may be held at a temperature of about 500°C for about 4 hours. The inventors have found that such a heat-treatment leads to a further improvement in adhesion between the bond-material and the or each component body.

The first to fifth methods may be used to join any type of component body. For example, the methods may be used to join vehicle component bodies (i.e. to form vehicle components) such as engine component bodies (i.e. to form engine components). In some examples, one of the component bodies may be a mechanical fastener such as a rivet, bolt or screw. In such examples, the joint formed between the mechanical fastener and the other component body by cold-spraying with the bond material may be a secondary joint which strengthens a primary joint between the mechanical fastener and the other component body (i.e. a primary joint achieved through the action of the mechanical fastener itself).

In each of the first to fifth methods, the component bodies may be formed from any suitable material. However, the methods may be particularly beneficial when joining component bodies formed from metals or metal alloys. The inventors have found that the use of a cold-sprayed bond material is also particularly effective in improving joining of component bodies made of dissimilar materials. The inventors have also found that the methods may be particularly effective when one or both component bodies include non-metallic, intermetallic, ceramic or oxide phases (which may be present in component bodies formed from metals or metal alloys, for example as metal oxide surface coatings or as non-metallic, intermetallic, ceramic or oxides phases in an alloy microstructure also including predominantly metallic phases, such as in ferrous alloys like cast iron).

Although the fourth and fifth example methods described hereinabove make use of welding to join the two component bodies, it will be appreciated that other joining methods may be used, dependent on the materials from which the component bodies are formed and on the bond material. Other possible joining methods include brazing and soldering. It will also be appreciated that different types of welding may be selected based on the materials used and the nature of the component bodies to be joined. Example types of welding include arc welding, gas welding, resistance welding, friction welding, electron beam welding and laser welding. The methods of the fourth and fifth examples may be particularly useful when joining component bodies formed of materials which are themselves not suited to welding, for example because of excessively low or high melting points or because properties (e.g. mechanical properties) of the component bodies are adversely affected by welding (e.g. where the microstructure of a component body may be negatively affected by changes induced in a heat affected zone (HAZ) of a weld).

It will also be appreciated that the cold-spraying conditions (for example, cold-spray apparatus parameters) may be varied dependant on the materials to be deposited and the thickness of the coatings to be obtained. Exemplary cold-spray parameters are provided below under *Examples.*

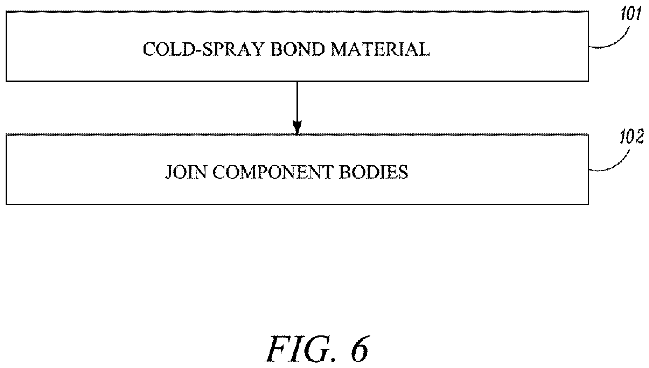

As illustrated in Figure 6, each of the first to fifth example methods include the steps of: cold-spraying a bond material onto at least one surface of one of two component bodies (block 101); and joining the two component bodies together (block 102).

It will be understood that the invention is not limited to the embodiments above-described and various modifications and improvements can be made without departing from the concepts described herein within the scope of the claims.

### EXAMPLES

### Example 1

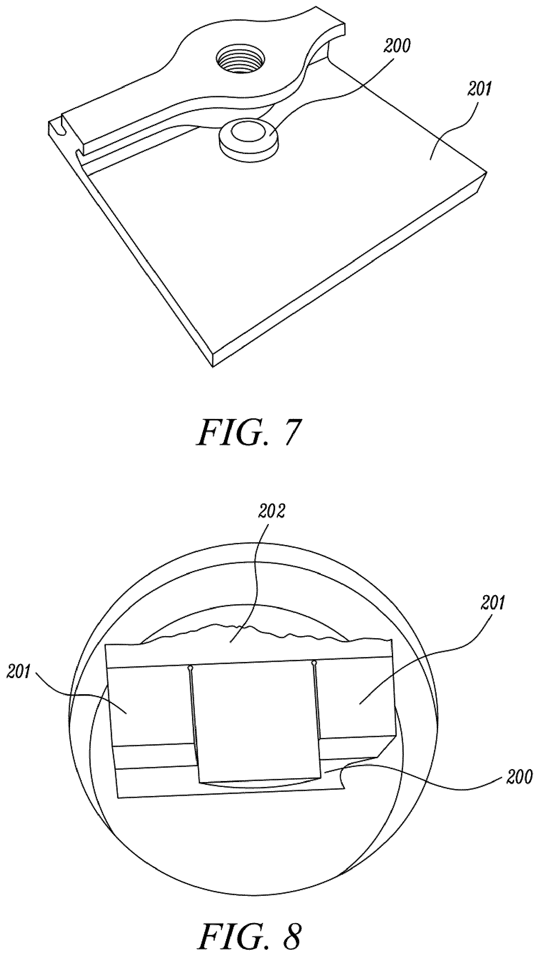

A flat rivet 200 made of an aluminium alloy (AI-6061) was riveted to a fan containment case 201 for a gas turbine engine, as shown in Figure 7. The fan containment case 201 was also made of an aluminium alloy (AI-6061). The flat rivet 200 and surrounding portions of the fan containment case 201 were cold-sprayed with a coating 202 of aluminium alloy (AI-6061) and alumina (Al₂O₃) bond material.

The bond material was cold-sprayed using the following cold-spraying parameters:
Propellant Gas: N₂
Gas Temperature: 300-500°C
Gas Pressure: 20-30 bar
Gun Scan Speed: 500 mm/second
Step Size: 1 mm

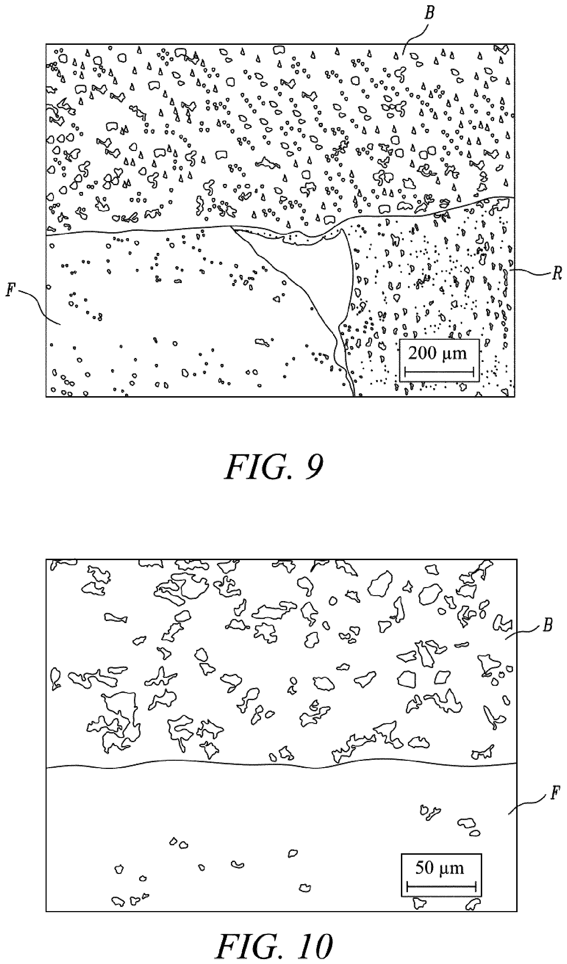

The adhesion of the bond material to the rivet 200 and fan containment case 201 was investigated by imaging a metallurgical sample (shown in Figure 8) cut in cross-section through the rivet perpendicular to the fan containment case surface. The sample was ground, polished and etched according under standard metallurgical sampling conditions and was imaged in an optical microscope. Figures 9, 10 and 11 are optical micrographs showing, respectively: an interfacial region between the bond material, *B*, the rivet material, *R,* and the fan containment case material, *F;* an interface between the bond material, *B*, and the fan containment case material, *F;* and an interface between the bond material, *B*, and the rivet material, *R.*

The bond material was found to form a porous coating which bonded well with the fan containment case and the rivet material. A small gap is visible in Figure 9 between the fan containment case and the rivet where the bond material did not bond well.

### Example 2

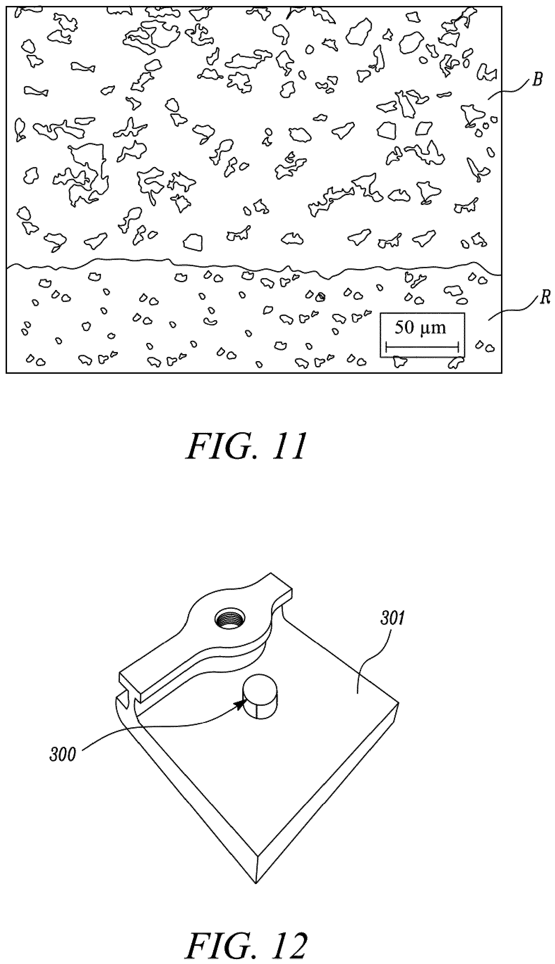

A topped rivet 300 made of an aluminium alloy (AI-6061) was riveted to a fan containment case 301 for a gas turbine engine, as shown in Figure 12. The fan containment case 301 was also made of an aluminium alloy (AI-6061). The topped rivet 300 and surrounding portions of the fan containment case 301 were cold-sprayed with a coating 302 of aluminium alloy (Al-6061) and alumina (Al₂O₃) bond material.

The bond material was cold-sprayed using the following cold-spraying parameters:
Propellant Gas: N₂
Gas Temperature: 300-500°C
Gas Pressure: 20-30 bar
Gun Scan Speed: 500 mm/second
Step Size: 1 mm

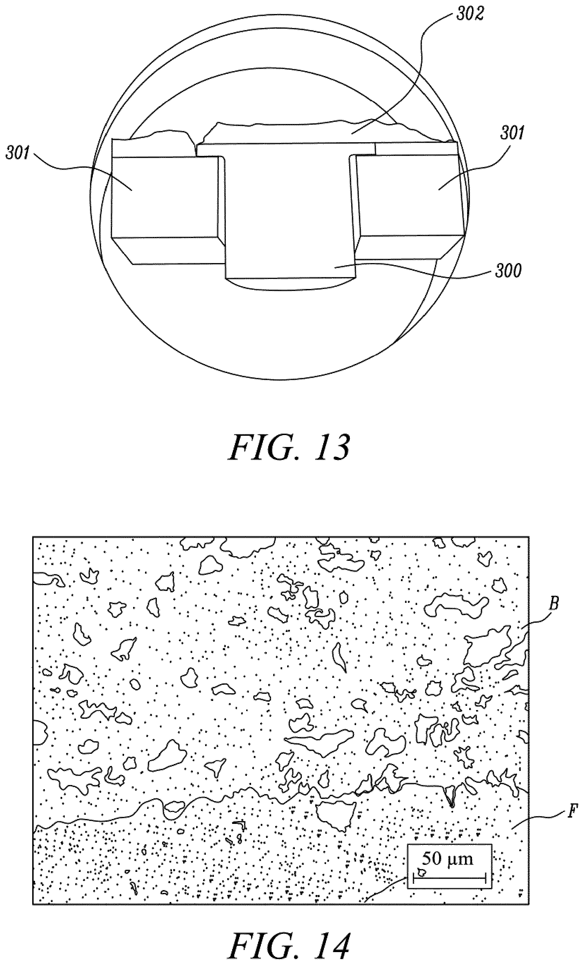

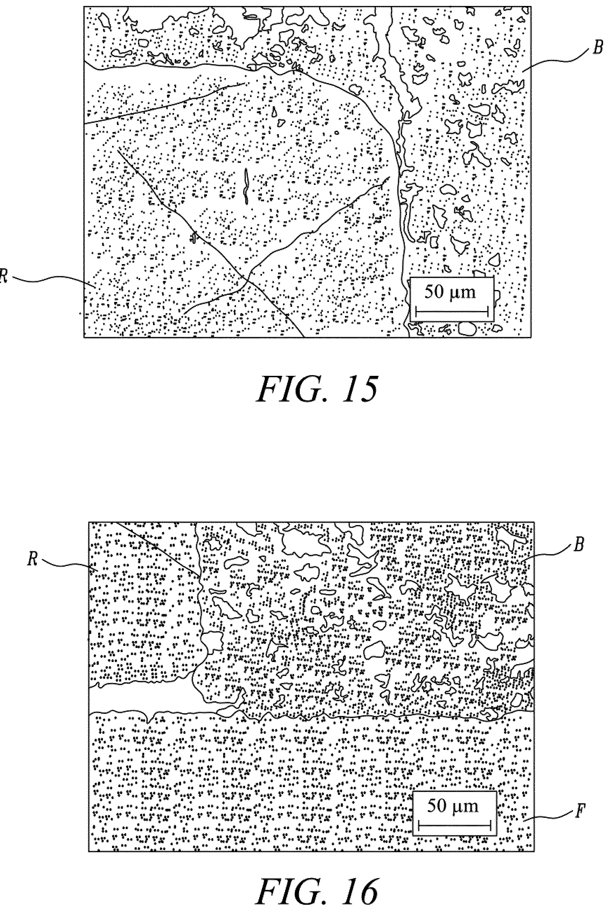

The adhesion of the bond material to the topped rivet 300 and fan containment case 301 was investigated by imaging a metallurgical sample (shown in Figure 13) cut in cross-section through the rivet perpendicular to the fan containment case surface. The sample was ground, polished and etched according under standard metallurgical sampling conditions and was imaged in an optical microscope. Figures 14, 15 and 16 are optical micrographs showing, respectively: an interface between the bond material, *B*, and the fan containment case material, *F;* an interface between the bond material, *B*, and the rivet material, *R;* and an interfacial region between the bond material, *B*, the fan containment case material, *F,* and the rivet material, *R.*

The bond material was found to form a porous coating which bonded well with the fan containment case and the rivet material.

### Example 3

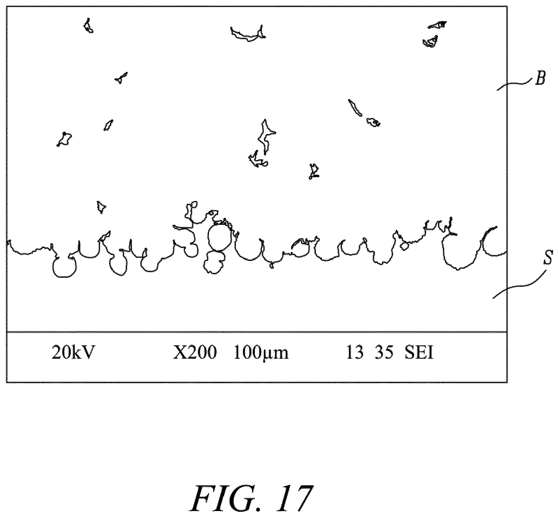

A Co-Cr-Mo alloy bond material was cold-sprayed onto a substrate made of an aluminium alloy (AI-6061). A sample was cut perpendicular to an interface between the bond material, *B*, and the substrate, S. A scanning electron microscope (SEM) image obtained from this sample is shown in Figure 17. Mechanical interlocking of the bond material and the substrate is visible at the interface (i.e. particles of the bond material penetrate into the substrate).

## Claims

1. A method of joining first and second component bodies (1, 2, 10, 11, 20, 21, 30, 31, 40, 41), the method comprising the steps of:
cold-spraying a first joining surface (3A, 12B, 22B, 32B, 42B) of the first component body (1, 10, 20, 30, 40) with a bond material (6, 15, 26, 34, 44) which is harder than the first joining surface;
cold-spraying a second joining surface (4A, 13A, 23B, 43B) of the second component body (2, 11, 21, 41) with the bond material (6, 15, 26, 45); and
joining the first and second component bodies (1, 2, 10, 11, 20, 21, 30, 31, 40, 41) by way of the first joining surface (3A, 12B, 22B, 32B, 42B).

2. The method of claim 1, wherein a difference between a Vickers hardness of the bond material (6, 15, 26, 34, 44) and a Vickers hardness of the first joining surface (3A, 12B, 22B, 32B, 42B) is at least 100 HV when measured under the same conditions.

3. The method of claim 1 or 2, wherein a difference between the Vickers hardness of the bond material (6, 15, 26, 45) and a Vickers hardness of the second joining surface (4A, 13A, 23B, 43B) is at least 100 HV when measured under the same conditions.

4. The method of any preceding claim, wherein the method comprises:
cold-spraying the bond material onto and between the first and second joining surfaces (3A, 4A, 12B, 13B, 22B, 23B) to form a joint between the first and second joining surfaces (3A, 4A, 12B, 13B, 22B, 23B), thereby joining the first and second component bodies (1, 2, 10, 11, 20, 21) to one another.

5. The method of claim 4, wherein the method further comprises heating the joint.

6. The method of claim 5, wherein the method comprises heating the joint for at least 30 minutes, at least 1 hour, at least 2 hours, or at least 4 hours.

7. The method of claim 5 or 6, wherein heating the joint comprises holding the joint at a temperature from 200°C to 1000°C, optionally from 300°C to 700°C.

8. The method of any preceding claim, wherein the first and second joining surfaces (3A, 4A, 12B, 13A, 22B, 23B, 42B, 43B) comprise different materials.

9. The method of any preceding claim, wherein the method comprises:
cold-spraying the first joining surface (32B, 42B) with the bond material (34, 44) to form a first bond coating (34, 44); and
cold-spraying a second joining surface (43B) of the second component body (41) with the bond material (45) to form a second bond coating (45); and
welding the first bond coating (34, 44) to the second component body (31, 41).

10. The method of claim 9, wherein welding comprises arc welding, gas welding, resistance welding, friction welding, electron beam welding or laser welding.

11. The method of any preceding claim, wherein the first joining surface (3A, 12B, 22B, 32B, 42B), and the second joining surface (4A, 13A, 23B, 43B) each comprises a metal or a metal alloy.

12. The method of claim 11, wherein the first joining surface (3A, 12B, 22B, 32B, 42B), and the second joining surface (4A, 13A, 23B, 43B) each further comprises a non-metallic, intermetallic, ceramic or oxide phase.

13. The method of any preceding claim, wherein the bond material (6, 15, 26, 34, 44, 45) comprises a metal or a metal alloy, optionally aluminium, an aluminium-based alloy, cobalt, a cobalt-based alloy, titanium or a titanium-based alloy, and/or a ceramic, optionally an oxide such as alumina.

14. A component comprising:
a first component body (1, 10, 20, 30, 40) and a second component body (2, 11, 21, 31, 41) joined to one another at a joint by a region of bond material (6, 15, 26, 34, 44, 45) in direct contact with the first component body (1, 10, 20, 30, 40) and the second component body (2, 11, 21, 31, 41);
wherein the first component body (1, 10, 20, 30, 40) comprises a first body material, the second component body (2, 11, 21, 31, 41) comprises a second body material, and the bond material (6, 15, 26, 34, 44, 45) is harder than the first body material when measured under the same conditions.

15. The component of claim 14, wherein the Vickers hardness of the bond material (6, 15, 26, 34, 44, 45) is at least 100 HV greater than the Vickers hardness of the first body material when measured under the same conditions; and the Vickers hardness of the bond material (6, 15, 26, 34, 44, 45) is at least 100 HV greater than the Vickers hardness of the second body material when measured under the same conditions.
